Europäisches Patentamt

European Patent Office

Office européen des brevets

(11) Publication number: **0 173 125 B1**

# EUROPEAN PATENT SPECIFICATION

(45) Date of publication of patent specification: **04.11.92**  (51) Int. Cl.⁵: **G06F  15/20**

(21) Application number: **85109850.9**

(22) Date of filing: **06.08.85**

(54) **In-line dynamic editor for mixed object document.**

(30) Priority: **30.08.84 US 645622**

(43) Date of publication of application:
**05.03.86 Bulletin  86/10**

(45) Publication of the grant of the patent:
**04.11.92 Bulletin  92/45**

(84) Designated Contracting States:
**DE FR GB IT**

(56) References cited:

ELECTRONIC DESIGN, vol. 30, no. 12, June 1982, pages 5513-5520, Waseca, Denville, N.Y., US; J. McLEOD: "Advanced work stations grow into professional tools"

IBM TECHNICAL DISCLOSURE BULLETIN, vol. 26, no. 9, February 1984, page 4798, New York, US; R.E. KARNES Jr. et al.: "Integration of graphic data into a document prepared through word processor"

IEEE COMP. SOC. CONF. ON PATTERN RECOGNITION AND IMAGE PROCESSING, 14th-17th June 1982, Las Vegas, pages 411-419, IEEE, New York, US; S.M. GOLDWASSER et al.: "Page composition of continuous tone imagery"

1981 IEEE Comp.Workshop on Comp. Arch. for Pattern Analysis and Image Database Managment, Hot Spring, Verginia, 11-13 Nov. 1981, pages 301-308, IEEE, New York US; S.M.Goldwasser:"A generalised segment display processor architec-ture"

(73) Proprietor: **International Business Machines Corporation**
**Old Orchard Road**
**Armonk, N.Y. 10504(US)**

(72) Inventor: **Barker, Barbara A.**
**2800 Carmel Drive**
**Round Rock Texas 78681(US)**
Inventor: **McCaskill, Rex A.**
**4508 Bridlewood Drive**
**Austin Texas 78727(US)**

(74) Representative: **Schuffenecker, Thierry**
**Compagnie IBM France, Département de Propriété Intellectuelle**
**F-06610 La Gaude(FR)**

EP 0 173 125 B1

## Description

Field of the Invention

This invention generally relates to integrated multiple data editors and, more particularly, to the intelligent, in-line, dynamic editing of documents containing mixed object types.

Description of the Prior Art

The trend in computer programs today is to provide some form of integration of various program applications. Without integration, the user must employ separate application programs for word processing, data processing and graphic applications. When separate application programs are used for these various functions, it is often difficult to merge the outputs of the several applications into a single document. Therefore, the purpose of program application integration is to simplify the use of a computer to produce a desired output product.

The simplest form of integration is a series of application programs designed to work alike sharing the same files and using the same or similar commands to perform THE SAME OR SIMILAR FUNCTIONS. This form of integration is relatively easy to implement but does not allow the individual programs of the family to be run simultaneously. Currently, the most popular integrated software are what may be termed multiple-function programs. These are characterized as incorporating a variety of applications within the program. Such programs generally allow splitting of the screen into several different windows almost as if each were a separate program. Typically, these multiple-function programs include text, spreadsheet and business graphing applications. Somewhat similar to the multiple-function programs is the integration technique based on a database application environment wherein all applications share a common set of data. Quite a different approach is taken when an integrated operating environment is provided. In this approach, individual programs can share information and often appear on the screen at the same time, each in its own window. Applications can be chosen and combined in contrast to multiple-function programs that are limited to applications programmed into the package.

As part of a research effort at the IBM CAMBRIDGE SCIENTIFIC CENTER in Cambridge, Massachusetts, to develop software techniques in the field of office systems, Sheldon Borkin and John Prager develop the personal on-line integrated text editor (POLITE). This is an easy-to-use, realtime editor and formatter for compound documents. A compound document is one containing images, draw graphics, charts, handwriting, text, tables and mathematical symbols. The philosophy of POLITE is the idea that an editor should be able to handle integration of functions in-line without having to invoke separate applications and without using a cut and paste buffer. The Apple Lisa and Macintosh and the Xerox Star computers are all integrated systems offering the capability to edit compound documents, but the method commonly used in those computers is to place the result of the requested function in a cut buffer and then to return to the document editor to paste the result in the desired location. This is a time-consuming and tedious process.

Although Polite provides function integration from within a single application, the editing environment is controlled by explicit user actions. The user must display the menu that applies to an object before an applicable action can be selected, or must type the action on the command line after selecting the object.

A major difference between this invention and the Polite editor is that the editing environment is controlled by the editor and not the user. The editor determines what commands to display based on the object type selected and/or the current location of the cursor used to select objects and actions. The user does not explicitly request that commands be displayed. The editor manages each document page as an area occupied by object sets that can contain text, graphic, image or tabular data, and that can have a relationship with any of the other object sets on the page, on another page in the document or external to the document.

Summary of the Invention

It is an object of the present invention to provide a mixed object editor that executes actions on objects and attributes based on internal knowledge of the object type and environment rather than by explicit user commands.

It is another object of this invention to provide a simple user interface that makes manipulation of objects and attributes and command execution transparent to the user.

It is a further object of the invention to provide a method of editing all objects in-line on the page and not in separate windows or via an input line.

It is yet another object of the invention to provide a generic method of editing mixed objects within a document that does not require a separate application load or specifying an explicit command.

The invention provides for a method for the intelligent, in line, dynamic editing of documents containing mixed object types on a computer work station comprising the steps of :

displaying a document and a command bar on the computer work station, said command bar containing at least generic actions which may be chosen by a user in the editing of the document ;

determining if an object on the document has been selected by the user for editing ; and

determining the type of object selected by the user for editing ;

characterized by the step of

displaying in said command bar editing actions which are specific to the type of object selected by the user for editing.

According to the invention, the editor provides a menu containing a generic set of commands that are valid for any object type. These commands include get, undo/redo, create, describe, search, goto, delete, move and copy. Whenever an object is selected, the editor displays object specific commands in addition to the generic commands being displayed. For example, if a graphic object is selected, rotate, shape and smooth are displayed concurrently with the generic commands. But, if a table object is selected, rotate, shape and smooth are replaced by clear, view and sort. Selection of the object is the trigger that makes the editor automatically change the set of commands that are to be displayed. The user does not have to explicitly tell the editor to change from one set to the next.

The controller uses the specified object and action to determine what processing is necessary and calls the appropriate subroutine automatically on an as needed basis. This operation is completely transparent to the user. Because of this design, the user never has to worry about different object types and the processes require for the merging of data on a page. Tables can be next to graphics and graphics next to text with no diminishing of flexibility.

Brief Description of the Drawings

The foregoing and other objects, aspects and advantages of the invention will be better understood from the following detailed description with reference to the drawings, in which :

Figure 1 is a sample "compound" document incorporating text, graphics and a table;

Figure 2 illustrates the page layout philosophy of the application composite editor upon which the improvement according to the preferred embodiment of the invention is based;

Figures 3A to 3E illustrate the generic commands valid for each edit object, and the commands valid for each object type; and

Figure 4 is a flow chart showing the operation of the invention.

Detailed Description of the Invention

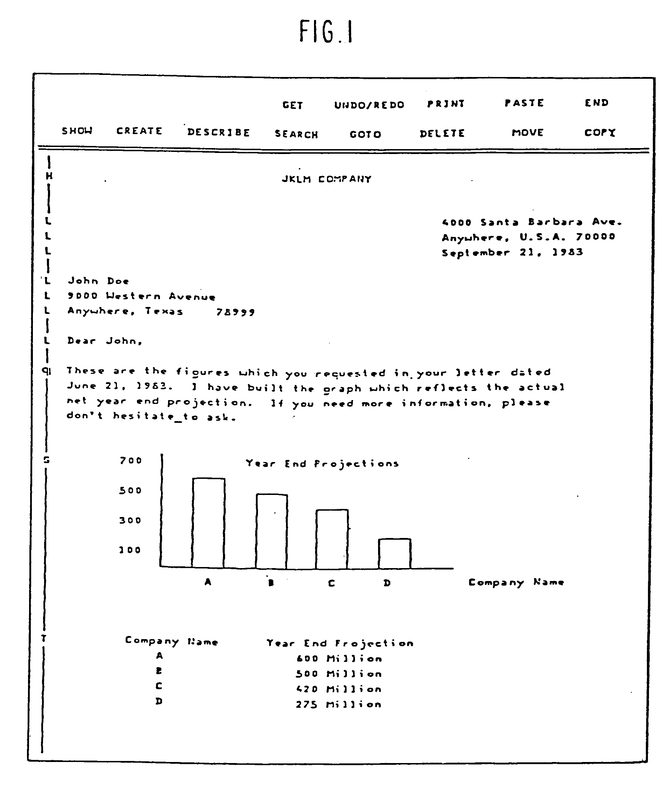

The application composite editor upon which the improvement according to a preferred embodiment of the invention is based is an application that provides for the creation and modification of documents consisting of mixes of at least four different data types. The data types available are text, graphics (both free form and charts), and tables (structured spreadsheet array data and from tables). Documents containing more than one type of data are called compound documents. An example of a compound document is illustrated in Figure 1 of the drawings. The example illustrated is a letter containing text, a vertical bar chart and tabular data. The application composite editor performs real-time WYSIWYG formatting and editing on such compound documents and is intended for use on personal computers such as the IBM PC/XT with a color graphics display. The editor is a single integrated programming application which is supported by the IBM PC DISK operating system (DOS) and uses a WYSIWYG system to display and manage pop-down panels.

All data in the editor resides on pages and all pages reside within a composite document. Each paragraph within the text of the document exists as an entity by itself; therefore, the user can create each paragraph with its own attributes. One paragraph can be centered and double spaced, the next right adjusted and single spaced, and the following left adjusted and quadruple spaced. Each paragraph can have its own margin settings which can be different from the margins specified for the page. Moreover, paragraphs do not have to have a right and left margin that are fixed. A paragraph can be wrapped around a graph or table structure on the page. A variety of shapes are available for the user to choose from while creating graphic objects, and a variety of chart types are also available for selection. Tables can be a single cell or multiple row/multiple column tables. In the latter case, arithmetic computations within a cell are supported as in a typical spreadsheet application.

The example shown in Figure 1 of the drawings also illustrates two application command bars at the top of the display screen. Within the command bars are command buttons which represent all the commands currently valid for the type of data being edited. The contents of these command bars change to reflect the actions which may be applied to the selected data type. A command may be selected by pointing with a pointing device, such as a mouse, and pressing an appropriate button. When a command is selected from the command bar and that command requires further user interaction, a pop-down panel will be displayed. Pop-down panels consist of keywords and/or value fields and/or informational text. Each pop-down panel has a QUIT button in its upper right-hand corner which, when selected by the user, causes the panel to be removed from the screen with the result that any selections made in a selection or parameter entry panel will be cancelled. Most multiple selection and parameter entry panels also have a DO button in the lower right hand corner which, when selected by the user, causes execution of the command. The pop-down panel is removed from the screen when the command is completed.

Also illustrated in Figure 1 along the left hand margin are icons which indicate the type of data within an object set; The icons illustrated are H for heading, L for line, ¶ for paragraph, G for graphics, and T for table.

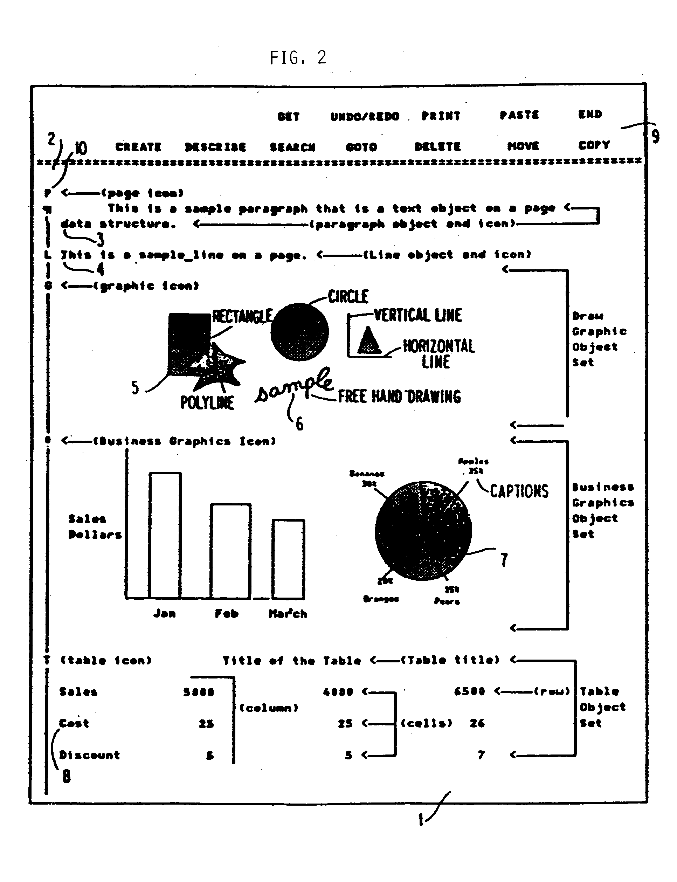

The editor works with a page layout philosophy which is illustrated in Figure 2 of the drawings. IN this figure, there is shown a document page 2 which it is assumed is being displayed in an edit window 1 on all points addressable (APA) or bit mapped display device controlled by a stand alone or host connect computer work station. A user request to edit the document containing page 2 causes the page to be presented in edit window 1. Indicated on page 2 are a paragraph 3 and a line 4, examples of text objects, a rectangle 5 and free hand drawing 6, examples of draw graphic objects, a pie chart 7, an example of a business graphics object, and a spreadsheet 8, an example of a table object. Command bar 9 shows the generic commands valid for any object on page 2. At this point, the user can select any command on command bar 9 or any object on page 2 including icon 10 which represents the page 2 object.

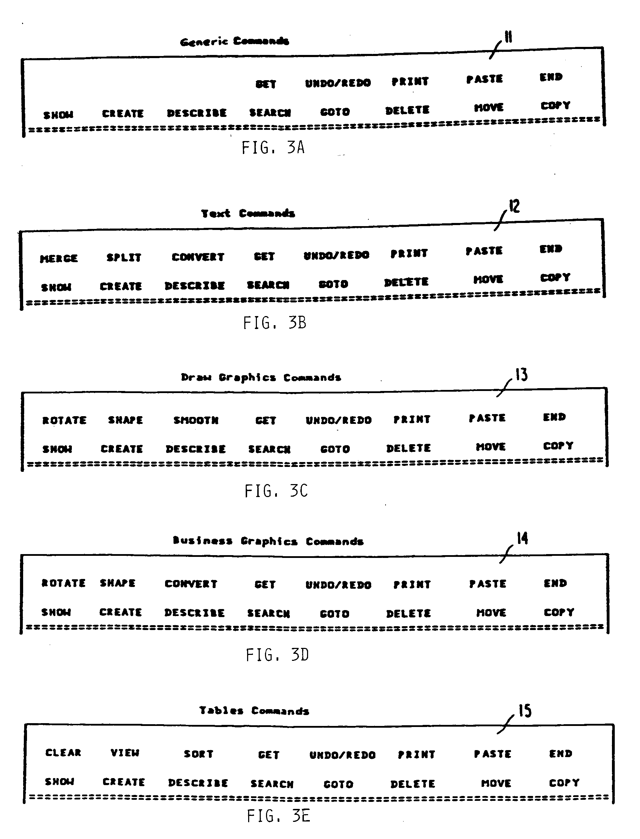

Figures 3A, 3B, 3C, 3D and 3E show the commands valid for each of the object types supported by the editor. Command bar 11 in Figure 2A contains the commands common to all document objects. Command bar 12 in Figure 3B contains the generic commands plus the text object specific commands MERGE, SPLIT and CONVERT. The draw graphic object specific commands ROTATE, SHAPE and SMOOTH are shown with the generic commands in command bar 13 in Figure 3C. ROTATE, SHAPE and CONVERT, the business graphic object specific commands, have been added to the generic commands in command bar 14 in Figure 3D, and command bar 15 in Figure 3E contains the table object specific commands CLEAR, VIEW and SORT. The system automatically displays one of the object specific command bars whenever the object type is selected for editing. For example, selection of rectangle 5 in Figure 2 will cause the system to display command bar 13, and selection of paragraph 3 or line 4 will cause command bar 12 to be displayed. The system always knows the type of the selected object and the commands that must be displayed for editing the object.

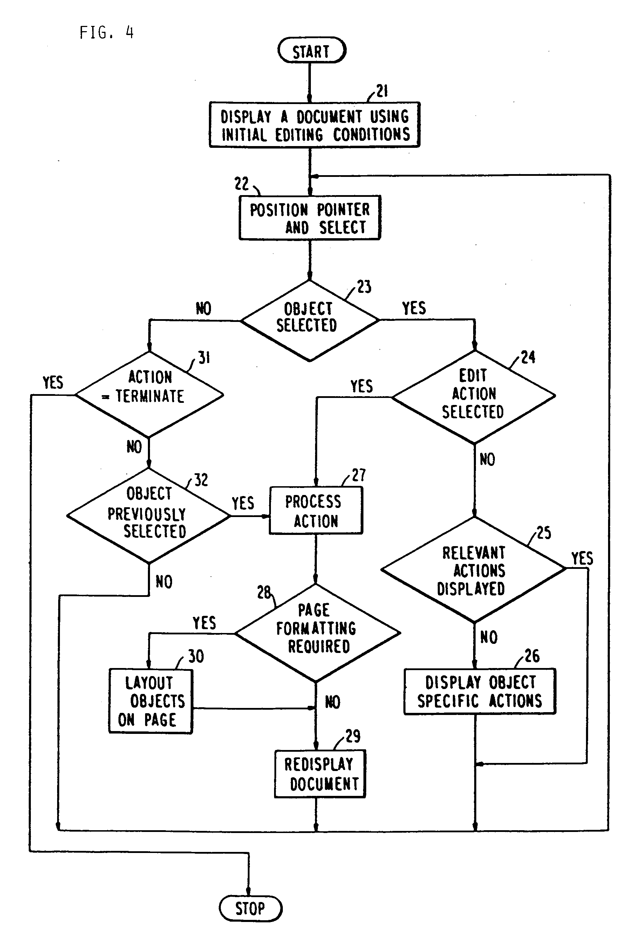

Reference is next made to the flow chart shown in Figure 4 which illustrates the process of editing a mixed object document. First, the operator indicates that a document is to be edited. The system then displays the commands valid for editing the document and the first page of the document, if the document already exists, or a blank page if the document is to be created. At this point, the operator can position the pointer at any location within the edit window, and select either a command or an object. This action is depicted in blocks 21 and 22. If an object has been selected, the flow of control is through block 23 to block 24; if the selection is an edit command, control passes to block 31. In block 24, the system checks to see if an edit action had been selected prior to selecting an object. If an action has been selected, the system processes the action in block 27. After processing the edit action, the system checks in block 28 to see if the document page needs to be reformatted. Reformatting of the page and layout of the objects on the page occurs in block 30. In block 29, the document is redisplayed in the edit window, and control returns to block 22.

At block 24, if an edit action has not been selected, control passes to block 25 where the system checks to see if the commands being displayed are valid for the object selected. If the commands are not valid, the system automatically displays the command bar that contains the actions specific to the selected object. After displaying the valid command bar, control returns to block 22.

If an edit action has been selected, the system checks in block 31 to see if the action is to terminate document editing. If the action has been selected, the system processes the action in block 27, tests for reformatting in block 28, reformats in block 30 and redisplays the document in block 29. Next, control returns to block 22. If an object has not been selected, control also returns to block 22 to wait for the operator to make a selection.

## Claims

1. A method for the intelligent, in line, dynamic editing of documents containing mixed object types on a computer work station comprising the steps of :

   displaying a document and a command bar on the computer work station, said command bar containing at least generic actions which may be chosen by a user in the editing of the document;

determining if an object on the document has been selected by the user for editing ; and

determining the type of object selected by the user for editing ;

characterized by the additional step of

displaying in said command bar editing actions which are specific to the type of object selected by the user for editing.

## Patentansprüche

1. Verfahren zum intelligenten, in-Line-artigen dynamischen Aufbereiten von Dokumenten, die bei einer Rechnerarbeitsstation gemischte Objektarten enthalten, welches die folgenden Schritte umfaßt:

Anzeigen eines Dokuments und eines Steuerstreifens bei der Rechnerarbeitsstation, wobei der Steuerstreifen zumindest generische Tätigkeiten enthält, die von einem Benutzer bei der Aufbereitung des Dokuments gewählt werden können,

Bestimmen, ob ein Objekt auf dem Dokument von dem Benutzer zum Aufbereiten ausgewählt wurde und

Bestimmen der Art eines von dem Benutzer zum Aufbereiten ausgewählten Objekts,

gekennzeichnet durch den folgenden zusätzlichen Schritt:

Anzeigen von Aufbereitungstätigkeiten in dem Steuerstreifen, die für die Art eines von dem Benutzer zum Aufbereiten ausgewählten Objekts spezifisch sind.

## Revendications

1. Méthode pour l'édition dynamique intelligente en direct de documents contenant des types d'objets mixtes sur une station de travail d'ordinateur, comprenant les étapes de :
affichage d'un document et d'un bandeau d'instructions sur la station de travail d'ordinateur, ledit bandeau d'instructions contenant au moins les actions génériques qui peuvent être choisies par un utilisateur dans l'édition du document ;
détermination de ce qu'un objet sur le document a été choisi ou non par l'utilisateur pour édition ; et
détermination du type d'objet choisi par l'utilisateur pour édition ;
caractérisée par l'étape additionnelle de
affichage, dans ledit bandeau d'instructions, d'actions d'édition qui se rapportent spécifiquement au type d'objet choisi par l'utilisateur pour édition.

# FIG.1

| | | | GET | UNDO/REDO | PRINT | PASTE | END |
|---|---|---|---|---|---|---|---|
| SHOW | CREATE | DESCRIBE | SEARCH | GOTO | DELETE | MOVE | COPY |

JKLM COMPANY

4000 Santa Barbara Ave.
Anywhere, U.S.A. 70000
September 21, 1983

John Doe
9000 Western Avenue
Anywhere, Texas     78999

Dear John,

These are the figures which you requested in your letter dated June 21, 1982. I have built the graph which reflects the actual net year end projection. If you need more information, please don't hesitate to ask.

Year End Projections

Company Name

| Company Name | Year End Projection |
|---|---|
| A | 600 Million |
| B | 500 Million |
| C | 420 Million |
| D | 275 Million |

FIG. 2

**Generic Commands** 11

|      |        |          | GET    | UNDO/REDO | PRINT  | PASTE | END  |
|------|--------|----------|--------|-----------|--------|-------|------|
| SHOW | CREATE | DESCRIBE | SEARCH | GOTO      | DELETE | MOVE  | COPY |

FIG. 3A

**Text Commands** 12

| MERGE | SPLIT  | CONVERT  | GET    | UNDO/REDO | PRINT  | PASTE | END  |
|-------|--------|----------|--------|-----------|--------|-------|------|
| SHOW  | CREATE | DESCRIBE | SEARCH | GOTO      | DELETE | MOVE  | COPY |

FIG. 3B

**Draw Graphics Commands** 13

| ROTATE | SHAPE  | SMOOTH   | GET    | UNDO/REDO | PRINT  | PASTE | END  |
|--------|--------|----------|--------|-----------|--------|-------|------|
| SHOW   | CREATE | DESCRIBE | SEARCH | GOTO      | DELETE | MOVE  | COPY |

FIG. 3C

**Business Graphics Commands** 14

| ROTATE | SHAPE  | CONVERT  | GET    | UNDO/REDO | PRINT  | PASTE | END  |
|--------|--------|----------|--------|-----------|--------|-------|------|
| SHOW   | CREATE | DESCRIBE | SEARCH | GOTO      | DELETE | MOVE  | COPY |

FIG. 3D

**Tables Commands** 15

| CLEAR | VIEW   | SORT     | GET    | UNDO/REDO | PRINT  | PASTE | END  |
|-------|--------|----------|--------|-----------|--------|-------|------|
| SHOW  | CREATE | DESCRIBE | SEARCH | GOTO      | DELETE | MOVE  | COPY |

FIG. 3E

FIG. 4